# EUROPÄISCHE PATENTSCHRIFT

(11) **EP 0 807 513 B1**
(45) Veröffentlichungstag und Bekanntmachung des Hinweises auf die Patenterteilung: **24.07.2002**
(21) Anmeldenummer: 97107430.7
(22) Anmeldetag: 06.05.1997
(51) Int. Cl.: B29C 65/18, B65B 61/18

(54) **Vorrichtung zum Verbinden eines Aufreissstreifens mit einer Folienbahn**
Apparatus for joining a tearstrip to a film
Appareil pour la fixation d'une bande de déchirage sur un film

(30) Priorität: 14.05.1996 DE 19619558
(43) Veröffentlichungstag der Anmeldung: 19.11.1997
(73) Patentinhaber: Focke & Co. (GmbH & Co.), 27283 Verden (DE)
(72) Erfinder: Focke, Heinz, 27283 Verden (DE); Köster, Johann, 27283 Verden (DE)
(74) Vertreter: Bolte, Erich, Dipl.-Ing.

(56) Entgegenhaltungen:
- DE-A- 1 511 626
- DE-A- 2 407 447
- DE-A- 3 821 266
- DE-C- 819 497
- DE-U- 9 012 482
- GB-A- 961 805
- US-A- 2 451 728
- US-A- 2 660 219
- US-A- 2 845 213
- US-A- 3 218 961
- US-A- 3 484 325
- US-A- 4 067 761
- US-A- 4 717 372
- US-A- 4 808 150

## Beschreibung

Die Erfindung betrifft eine Vorrichtung zum Verbinden eines fortlaufend zugeführten Materialstreifens, insbesondere eines Aufreißstreifens, mit einer fortlaufend geförderten Materialbahn, insbesondere einer Folienbahn, zum Herstellen von Zuschnitten für Packungsumhüllungen mit Aufreißstreifen, wobei der Materialstreifen durch beheizte, nach Maßgabe der Förderbewegung der Materialbahn und des Materialstreifens drehende Druck- und Siegelorgane an die Materialbahn andrückbar und mit dieser verbindbar ist und wobei als Druck- und Siegelorgan eine beheizte Siegelrolle vorgesehen ist.

Verpackungen sind vielfach mit einer Außenumhüllung aus dünner Kunststofffolie oder Zellglasfolie versehen. Diese wird bei Ingebrauchnahme der Verpackung mit Hilfe eines Aufreißstreifens entfernt. Insbesondere sind Zigarettenpackungen mit einer durch einen ringsherum laufenden Aufreißstreifen zerstörbaren Umhüllung versehen.

Der Aufreißstreifen wird üblicherweise fortlaufend auf die ebenfalls fortlaufende Folienbahn aufgebracht und mit dieser durch Kleben oder thermisches Siegeln verbunden. Bei dem letztgenannten Verfahren ist der Aufreißstreifen mit einem durch Wärme und Druck aktivierbaren Kleber versehen. Die Verbindung des Aufreißstreifens mit der Folienbahn ist dadurch zeitaufwendig und erfordert besondere apparative Einrichtungen.

Aus der DE-A-38 21 266 ist eine Vorrichtung für die Anbringung eines Aufreißstreifens an einem endlosen Band aus Umhüllungsmaterial bekannt, wobei die Verschweißung des Streifens und des Bandes während des Laufes derselben um eine Umlenkwalze erfolgt, die mittels Heizeinrichtungen geheizt wird. Aufgrund der Umlenkung von Aufreißstreifen und Band um die genannte Umlenkwalze kommt es zu Materialverschiebungen während des Verklebens.

Die GB 961 805 zeigt eine Vorrichtung zum Heißsiegeln von entsprechender Folie oder beschichtetem Papier. Das Aufbringen eines Materialstreifens ist nicht gezeigt. Erkennbar sind vier Rollenpaare, zwischen denen eine Materialbahn hindurchgeführt und dabei gesiegelt wird. Die Rollenpaare sind an Siegelbacken gehalten, sodass die Rollen mit ihren Durchmessern durch eine unterbrochene Oberfläche von Siegelleisten hindurchtreten.

Der Erfindung liegt die Aufgabe zugrunde, das Anbringen eines Materialstreifens, insbesondere eines Aufreißstreifens, an einer Folienbahn unter Aufwendung von Wärme und Druck zu verbessern, dahingehend, dass die Verbindung auch bei höheren Arbeitsgeschwindigkeiten zuverlässig erfolgt, und dass insbesondere zusätzlich Wärme auf die Siegelrollen und auf das zu verbindende Material übertragen wird.

Zur Lösung dieser Aufgabe ist die erfindungsgemäße Vorrichtung dadurch gekennzeichnet, dass mehrere Siegelrollen in Förderrichtung aufeinanderfolgend angeordnet und überwiegend oder ausschließlich indirekt beheizt sind, dass im Bereich zwischen den aufeinanderfolgenden Siegelrollen und mit geringem Abstand zur Materialbahn bzw. zum Materialstreifen Wärmeübertragungsorgane, nämlich beheizte Stege angeordnet sind, dass die Stege dünnwandig sind und sich in Längsrichtung des Materialstreifens erstrecken, und dass die Stege mit Abstand der Kontur der in Förderrichtung aufeinanderfolgend angeordneten Siegelrollen folgen.

Bei der erfindungsgemäßen Vorrichtung werden demnach die miteinander zu verbindenden Materialien, nämlich die Folienbahn und der auf dieser positionsgerecht angeordnete Aufreißstreifen fortlaufend zwischen Druckrollen und Gegendruckrollen hindurchgefördert, wobei mindestens die Druckrollen beheizt sind.

Bei einer vorteilhaften Ausführungsform der Erfindung sind in Förderrichtung der Materialbahn aufeinanderfolgend drei indirekt beheizte Druckrollen positioniert und auf der gegenüberliegenden Seite derselben drei Gegendruckrollen.

Mit Hitfe der Erfindung wird zusätzlich (Strahlungs-)Wärme auf die Siegelrollen und zusätzlich auf das zu verbindende Material, also Aufreißstreifen und Materialbahn, durch die Stege übertragen .

Bevorzugte Ausführungsformen der Erfindung sind Gegenstand der Patentansprüche und werden nachfolgend anhand eines in den Zeichnungen dargestellten Ausführungsbeispiels näher beschrieben. Es zeigt:
- Fig. 1: eine Einrichtung zum Verbinden einer Folienbahn mit einem Aufreißstreifen in schematischer Seitenansicht,
- Fig. 2: eine Verbindungsstation von Aufreißstreifen und Folienbahn, ebenfalls in Seitenansicht, bei vergrößertem Maßstab,
- Fig. 3: eine Einzelheit der Vorrichtung gemäß Fig. 2 in nochmals vergrößertem Maßstab, teilweise im Vertikalschnitt,
- Fig. 4: eine einzelne Druck- bzw. Siegelrolle im Radialschnitt, nochmals vergrößert,
- Fig. 5: eine Halterung mit Gegendruckrollen in Seitenansicht.

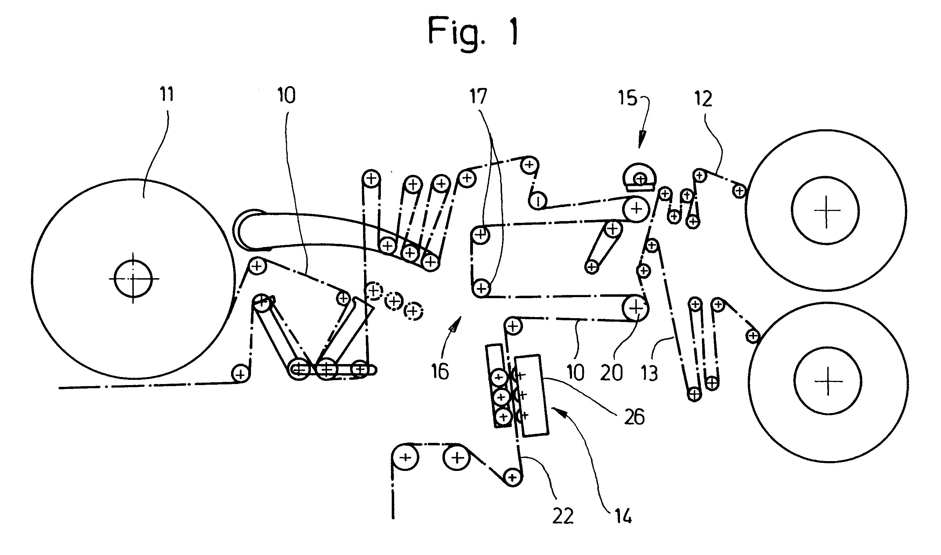

Das vorliegende Ausführungsbeispiel ist besonders geeignet im Zusammenhang mit der Fertigung von Zigarettenpackungen mit einer Außenumhüllung aus Zellglas oder Kunststoffolie mit einem Aufreißstreifen. Fig. 1 zeigt ein Folienaggregat als Teil einer Verpackungsmaschine.

Eine Folienbahn 10 wird fortlaufend von einer Bobine 11 abgezogen und über eine Vielzahl von Umlenk- und Steuerwalzen geführt. Ein Aufreißstreifen 12, 13 wird bei kontinuierlichem Transport der Folienbahn 10 an diese angelegt und im Bereich einer Siegelstation 14 ebenfalls bei fortlaufendem Transport mit der Folienbahn 10 durch Aufwendung von Wärme und Druck verbunden. Die Einheit aus Folienbahn 10 und Aufreißstreifen 12, 13 wird der Verpackungsmaschine zugeführt bzw. einem Trennaggregat zum Abtrennen von Zuschnitten für die Außenumhüllung.

Eine Besonderheit der in Fig. 1 gezeigten Einrichtung besteht darin, daß diese für zweibahnige Betriebsweise ausgelegt ist. Die von der Bobine 11 abgezogene Folienbahn 10 hat doppelte Breite. Im Bereich einer Trennstation 15 wird die Folienbahn 10 in zwei nebeneinanderlaufende Folienbahnen halber Breite durch einen mittleren Längsschnitt aufgeteilt. Die beiden nebeneinanderlaufenden Folienbahnen 10 werden im Bereich einer Spreizstation 16 durch Spreizrollen 17 so umgelenkt, daß die beiden Folienbahnen 10 in einem Abstand voneinander parallel weitertransportiert werden.

Jeder der Folienbahnen 10 ist ein Aufreißstreifen 12, 13 zugeordnet. Diese werden von gesonderten Bobinen abgezogen. Im Bereich einer Vereinigungswalze 20, die zugleich Umlenkwalze für die beiden Folienbahnen 10 ist, werden die Aufreißstreifen 12 und 13 an die zugeordneten, nebeneinanderlaufenden Folienbahnen 10 angelegt.

Beide Folienbahnen 10 mit packungsgerecht anliegenden Aufreißstreifen 12, 13 werden sodann der Siegelstation 14 nebeneinanderlaufend zugeführt. Dort ist jeder Folienbahn 10 mit Aufreißstreifen 12, 13 ein Siegelaggregat 21 zugeordnet. Jede der gleichlaufenden, kontinuierlich geförderten Folienbahnen 10 wird durch ein Siegelaggregat 21 mit dem anliegenden Aufreißstreifen 12, 13 verbunden. Im Anschluß an die Siegelstation 14 werden demnach zwei Folienbahnen 10 mit je einem angesiegelten Aufreißstreifen 12, 13 parallel transportiert und der weiteren Verarbeitung zugeführt.

Die Aufreißstreifen 12, 13 sind so ausgebildet bzw. mit einer Beschichtung versehen, die eine haltbare Verbindung mit der Folienbahn 10 bei Aufbringen von Wärme und Druck gewährleistet. Das Siegelaggregat 21 ist so ausgebildet, daß Wärme und Druck während des kontinuierlichen Transports der Folienbahnen 10 fortlaufend auf diese bzw. auf die Aufreißstreifen 12, 13 aufgebracht werden.

Das Siegelaggregat 21 wird bei dem vorliegenden Ausführungsbeispiel im Bereich eines aufrechten Strangs 22 der Folienbahnen 10 und Aufreißstreifen 12, 13 wirksam. In Förderrichtung der Folienbahn wirken mehrere in Längsrichtung der Folienbahn 10 aufeinanderfolgende Siegelrollen 23, 24, 25 auf Folienbahn 10 und Aufreißstreifen 12, 13 ein. Im vorliegenden Falle sind drei Siegelrollen 23, 24, 25 an einem gemeinsamen, aufrechten Träger 26 übereinanderliegend positioniert. Die Siegelrollen 23, 24, 25 liegen im Bereich der Aufreißstreifen 12, 13 unter Übertragung von Druck an den Aufreißstreifen 12, 13 und damit indirekt an den Folienbahnen 10 an.

Auf der zu den Siegelrollen 23..25 gegenüberliegenden Seite der Folienbahn 10 sind Gegendruckorgane positioniert, nämlich (drei) Gegenrollen 27, 28, 29. Auch die Gegenrollen 27..29 sind an einem gemeinsamen Halter 30 gelagert. Die Gegenrollen 27..29 sind jeweils exakt gegenüber den Siegelrollen 23..25 gelagert. Durch diese werden Folienbahn 10 und Aufreißstreifen 12, 13 während der Förderbewegung an den Umfang der Gegenrollen 27..29 angedrückt. Siegelrollen 23..25 und Gegenrollen 27..29 sind entsprechend der Fördergeschwindigkeit der Folienbahn 10 angetrieben, werden durch diese infolge der Förderbewegung gedreht.

Die Siegelrollen 23..25 sind beheizt, so daß zum Druck auch die Wärme durch die Siegelrollen 23..25 übertragen wird. Bei dem vorliegenden Ausführungsbeispiel ist eine indirekte Beheizung der Siegelrollen 23..25 vorgesehen, und zwar insbesondere über Strahlungswärme.

Der Träger 26 ist als Gehäuse 31 ausgebildet, welches die Siegelrollen 23..25 nahezu vollständig umgibt, nämlich bis auf kleine Bereiche bzw. Öffnungen 32 für den Durchtritt von Siegelflächen der Siegelrollen 23..25 im Bereich der Folienbahn 10. Das Gehäuse 31 ist unmittelbar beheizt, im vorliegenden Fall durch eine sich in Längsrichtung erstreckende Heizpatrone 33. Diese ist in einer Bohrung 34 positioniert, die sich auf der zur Folienbahn 10 gegenüberliegenden Seite im Gehäuse 31 unmittelbar neben den Umfangsflächen der Siegelrollen 23..25 erstreckt. Das hierdurch beheizte Gehäuse 31 überträgt die Wärme auf die Siegelrollen 23..25. Am oberen Ende ist die Heizpatrone 33 mit einem Anschluß 35 für elektrische Leitungen versehen.

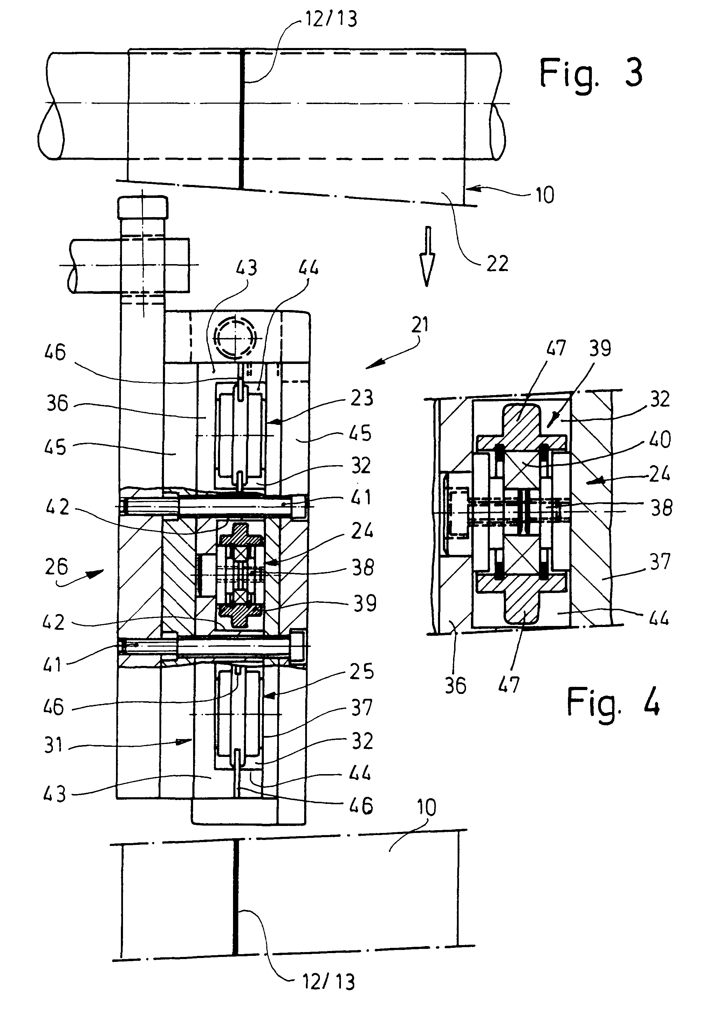

Das Gehäuse 31 für die Siegelrollen 23..25 ist in besonderer Weise ausgebildet, derart, daß (Strahlungs-)Wärme von dem Gehäuse 31 unmittelbar auf die Folienbahn 10 bzw. die Aufreißstreifen 12, 13 übertragen wird. Das Gehäuse 31 besteht im vorliegenden Fall aus zwei parallelen Längswänden 36, 37, in denen die Siegelrollen 23..25 mit als Schraubenbolzen ausgebildeten Drehachsen 38 gelagert sind. Wie insbesondere in Fig. 3 und 4 gezeigt, ist ein Drehkranz 39 der Siegelrollen 23..25 mit einem Wälzlager 40 drehbar auf der Drehachse 38 gelagert.

Die beiden Längswände 36, 37 sind durch quergerichtete Verbindungsbolzen 41 miteinander verbunden. Diese erstrecken sich im-Bereich von Querwänden 42 des Gehäuses 31. An den Enden, also oben und unten, ist das Gehäuse 31 durch Endwände 43 geschlossen. Die Siegelrollen 23..25 sind demnach jeweils in Kammern 44 gelagert, die lediglich zur Seite, also in Richtung zur Folienbahn 10, offen sind (Öffnungen 32).

Das so ausgebildete Gehäuse 31 ist außen von Isolierplatten 45 umgeben, die Wärmeverluste nach außen reduzieren. Die Isolierplatten 45 erstrecken sich im Bereich der Längswände 36, 37 und der Endwände 43. Die Verbindungsbolzen 41 erstrecken sich durch die Isolierplatten 45 hindurch, so daß die Einheit aus Gehäuse 31 und Isolierplatten 45 durch die Verbindungsbolzen 41 zusammengehalten wird. Diese dienen zugleich zur Verbindung der beschriebenen Einheit mit dem als einarmiger Hebel ausgebildeten Träger 26. An diesem ist das Gehäuse 31 demnach seitlich angebracht.

Zwischen den Siegelrollen 23..25 sind auf der der Folienbahn 10 zugekehrten Seite am Gehäuse 31 zusätzliche Organe zur Übertragung von (Strahlungs-)Wärme auf die Aufreißstreifen 12, 13 angeordnet. Es handelt sich dabei um Stege 46, die als verhältnismäßig dünnwandige Organe exakt im Bereich der Aufreißstreifen 12, 13 am Gehäuse angebracht sind, nämlich an den Querwänden 42 und den Endwänden 43. Die Stege 46 sind so ausgebildet, daß sie mit Abstand der Kontur der Siegelrollen 23..25 folgen und mit geringem Abstand von beispielsweise ¹/₅ bis ½ mm Abstand von dem Aufreißstreifen 12, 13 verlaufen. Dadurch wird berührungslos zusätzlich Wärme übertragen.

In besonderer Weise sind die Siegelrollen 23..25 ausgebildet. Im Bereich der äußeren Siegelfläche ist ein ringsherumlaufender Siegelsteg 47 gebildet. Dieser entspricht etwa der Breite der Aufreißstreifen 12, 13 bzw. ist geringfügig breiter. Durch diesen Siegelsteg 47 erhält der Drehkranz 39 als äußerer Bereich der Siegelrollen 23..25 einen T-förmigen Querschnitt. Dieser Teil der Siegelrollen 23..25 besteht aus einem metallischen Werkstoff mit hoher Wärmeleitfähigkeit.

Die Gegenrollen 27..29 haben im vorliegenden Falle nur die Aufgabe, den erforderlichen Gegendruck beim Siegeln zu erzeugen. Die Gegenrollen 27..29 sind ebenfalls mit Wälzlagern 48 auf Achszapfen 49 gelagert. Diese sind seitlich mit dem als einarmiger Hebel ausgebildeten Halter 30 befestigt.

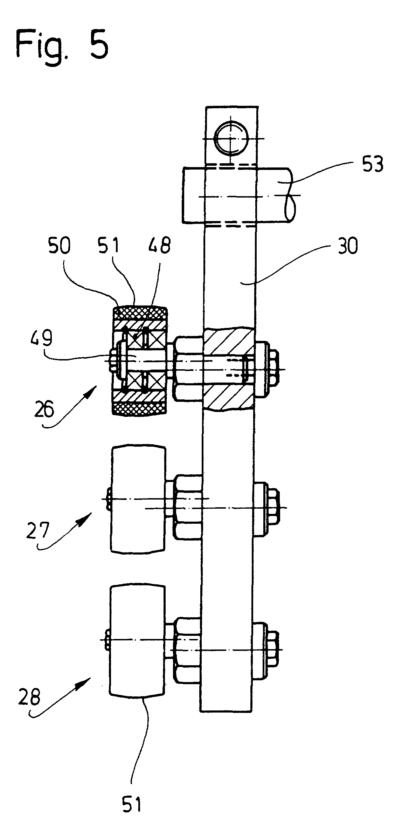

Die Gegenrollen 27..29 haben eine im Verhältnis zu den Siegelrollen 23..25 breitere äußere Anlage- bzw. Mantelfläche. Bei dem gezeigten Ausführungsbeispiel ist der Außenumfang der Gegenrollen 27..29 elastisch ausgebildet. Wie aus Fig. 5 ersichtlich, ist zu diesem Zweck auf den Gegenrollen 27..29 ein Mantel 50 aus elastischem Werkstoff befestigt, insbesondere aus Silikon. Die Folienbahn 10 wird demnach durch die Siegelrollen 23, 24 gegen den elastischen Mantel 50 gedrückt. Dieser hat, wie gezeigt, hier eine ballige äußere Anlagefläche 51.

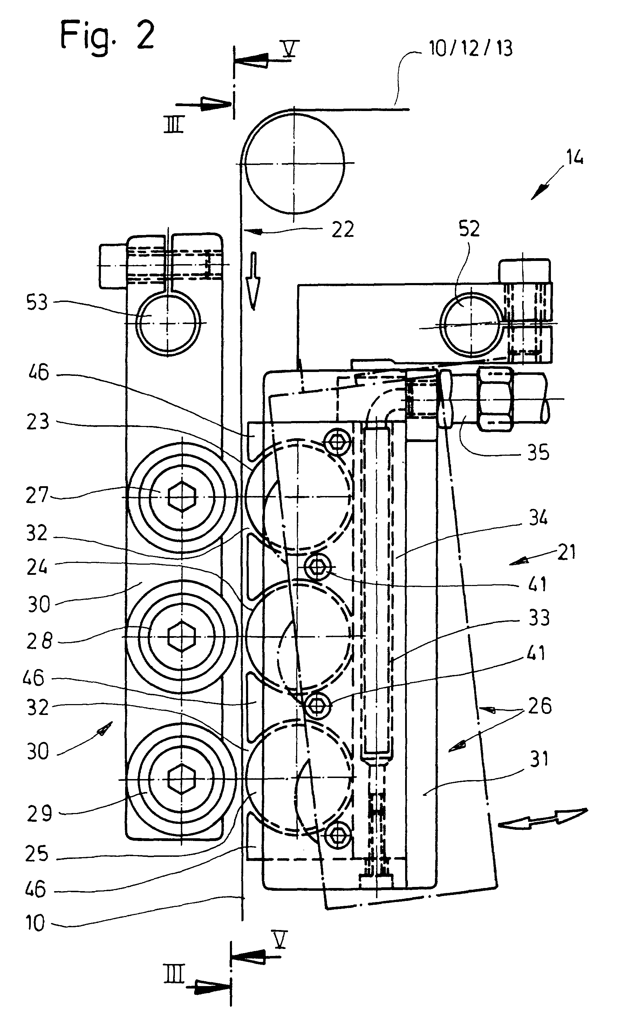

Die Siegelrollen 23..25 und/oder die Gegenrollen 27..29 sind verstellbar gelagert. Im vorliegenden Falle sind der Träger 26 einerseits und der Halter 30 andererseits bewegbar angeordnet. Der winkelförmig ausgebildete Träger 26 ist auf einem feststehenden Tragzapfen 52 drehbar gelagert. Bei Betriebsunterbrechung wird das Siegelaggregat 21 bzw. der Träger 26 mit den Siegelrollen 23..25 außer Anlage an den Folienbahnen 10 bewegt, nämlich durch Verschwenken in die in Fig. 2 strichpunktiert gezeichnete Position.

Auch der Halter 30 für die Gegenrollen 27..29 ist einseitig auf einem Haltezapfen 53 drehbar gelagert. Durch diese Lagerung kann die Relativstellung des Halters 30 mit den Gegenrollen 27..29 eingestellt werden.

## Patentansprüche

1. Vorrichtung zum Verbinden eines fortlaufend zugeführten Materialstreifens (12, 13), insbesondere eines Aufreißstreifens, mit einer fortlaufend geförderten Materialbahn (10), insbesondere einer Folienbahn, zum Herstellen von Zuschnitten für Packungsumhüllungen mit Aufreißstreifen, wobei der Materialstreifen (12, 13) durch beheizte, nach Maßgabe der Förderbewegung der Materialbahn (10) und des Materialstreifens drehende Druck- und Siegelorgane an die Materialbahn (10) andrückbar und mit dieser verbindbar ist, wobei als Druck- und Siegelorgan eine beheizte Siegelrolle vorgesehen ist, **dadurch gekennzeichnet, dass** mehrere Siegelrollen (23, 24, 25) in Förderrichtung aufeinanderfolgend angeordnet und überwiegend oder ausschließlich indirekt beheizt sind, dass im Bereich zwischen den aufeinanderfolgenden Siegelrollen (23, 24, 25) und mit geringem Abstand zur Materialbahn (10) bzw. zum Materialstreifen (12, 13) Wärmeübertragungsorgane, nämlich beheizte Stege (46) angeordnet sind, dass die Stege (46) dünnwandig sind und sich in Längsrichtung des Materialstreifens (12, 13) erstrecken, und dass die Stege (46) mit Abstand der Kontur der in Förderrichtung aufeinanderfolgend angeordneten Siegelrollen (23, 24, 25) folgen.

2. Vorrichtung nach Anspruch 1, **dadurch gekennzeichnet, dass** die Stege (46) aus wärmeleitendem Material bestehen.

3. Vorrichtung nach Anspruch 1 oder 2, **dadurch gekennzeichnet, dass** die Siegelrollen (23, 24, 25) in einem Gehäuse (31) aus einem Material hoher Wärmeleitfähigkeit gelagert sind, wobei das Gehäuse beheizt ist, vorzugsweise durch wenigstens eine in dem Gehäuse (31) angeordnete Heizpatrone (33).

4. Vorrichtung nach Anspruch 1 oder einem der weiteren Ansprüche, **dadurch gekennzeichnet, dass** die Stege (46) an einem Gehäuse (31) angeordnet und durch dieses bzw. durch eine in dem Gehäuse (31) angeordnete Heizpatrone (33) beheizt sind.

5. Vorrichtung nach Anspruch 1 oder einem der weiteren Ansprüche, **dadurch gekennzeichnet, dass** in Förderrichtung der Materialbahn (10) und des Materialstreifens (12, 13) mehrere Paare von einander gegenüberliegenden Siegelrollen (23, 24, 25) und Gegenrollen (27, 28, 29) angeordnet sind, insbesondere drei Paare von vorzugsweise annähernd gleichgroßen Siegelrollen (23, 24, 25) und Gegenrollen (27, 28, 29).

6. Vorrichtung nach Anspruch 1 oder einem der weiteren Ansprüche, **dadurch gekennzeichnet, dass** die Siegelrollen (23, 24, 25) ein (T-förmiges) Profil aufweisen mit einem schmalen äußeren, ringsherumlaufenden Siegelsteg (47) zur Anlage an dem Materialstreifen (12, 13), wobei insbesondere der Siegelsteg (47) Teil eines äußeren Drehkranzes (39) der Siegelrollen (23, 24, 25) ist und aus wärmeleitendem Material besteht.

7. Vorrichtung nach Anspruch 1 oder einem der weiteren Ansprüche, **dadurch gekennzeichnet, dass** die Gegenrollen (27, 28, 29) ganz oder teilweise, nämlich mindestens im Bereich eines äußeren Mantels (50), aus elastisch zusammendrückbarem Werkstoff bestehen, vorzugsweise aus Silikon.

8. Vorrichtung nach Anspruch 7 oder einem der weiteren Ansprüche, **dadurch gekennzeichnet, dass** die Gegenrollen (27, 28, 29) eine äußere Anlagefläche für die Materialbahn (10) aufweisen, die eine größere Breite hat als Siegelflächen der Siegelrollen (23, 24, 25), insbesondere als der Siegelsteg (47) derselben.

9. Vorrichtung nach Anspruch 1 oder einem der weiteren Ansprüche, **dadurch gekennzeichnet, dass** die Siegelrollen (23..25) bzw. das Gehäuse (31) an einem Träger (26) angebracht ist, der verstellbar gelagert ist, insbesondere als schwenkbarer, einarmiger Hebel.

10. Vorrichtung nach Anspruch 1 oder einem der weiteren Ansprüche, **dadurch gekennzeichnet, dass** die Gegenrollen (27, 28, 29) an einem Halter (30) angebracht sind, der relativ zu den Siegelrollen (23, 24, 25) verstellbar ist.

11. Vorrichtung nach Anspruch 1 oder einem der weiteren Ansprüche, **dadurch gekennzeichnet, dass** die Siegelrollen (23, 24, 25) und Gegenrollen (27, 28, 29) im Bereich eines aufrechten Förderabschnitts, nämlich eines aufrechten Strangs (22) der Materialbahn (10) wirken.

## Claims

1. Apparatus for joining a continuously supplied material strip (12, 13), in particular a tearstrip, to a continuously conveyed material web (10), in particular a film web, for producing blanks for pack wrappers with tearstrips, it being possible for the material strip (12, 13) to be pressed onto the material web (10) by heated pressing and sealing elements that rotate on the basis of the conveying movement of the material web (10) and of the material strip and to be joined to the said web, a heated sealing roller being provided as the pressing and sealing element, **characterized in that** a plurality of sealing rollers (23, 24, 25) are arranged to follow one another in the conveying direction and are predominently or exclusively heated indirectly, **in that**, in the region between the successive sealing rollers (23, 24, 25) and at a short distance from the material web (10) and the material strip (12, 13), heat transfer elements, specifically heated webs (46) are arranged, **in that** the webs (46) are thin-walled and extend in the longitudinal direction of the material strip (12, 13), and **in that** the webs (46) follow at a distance the contour of the sealing rollers (23, 24, 25) arranged to follow one another in the conveying direction.

2. Apparatus according to Claim 1, **characterized in that** the webs (46) consist of heat-conducting material.

3. Apparatus according to Claim 1 or 2, **characterized in that** the sealing rollers (23, 24, 25) are mounted in a housing (31) made of a material of high thermal conductivity, the housing being heated, preferably by means of at least one heating cartridge (33) arranged in the housing (31).

4. Apparatus according to Claim 1 or one of the further claims, **characterized in that** the webs (46) are arranged on a housing (31) and are heated by the latter or a heating cartridge (33) arranged in the housing (31).

5. Apparatus according to Claim 1 or one of the further claims, **characterized in that** in the conveying direction of the material web (10) and of the material strip (12, 13) a plurality of pairs of mutually opposite sealing rollers (23, 24, 25) and backing rollers (27, 28, 29) are arranged, in particular three pairs of sealing rollers (23, 24, 25) and backing rollers (27, 28, 29) of preferably approximately equal size.

6. Apparatus according to Claim 1 or one of the further claims, **characterized in that** the sealing rollers (23, 24, 25) have a (T-shaped) profile with a narrow outer sealing web (47) running all around to make contact with the material strip (12, 13), in particular the sealing web (47) being part of an outer ring mount (39) of the sealing rollers (23, 24, 25) and consisting of heat-conducting material.

7. Apparatus according to Claim 1 or one of the further claims, **characterized in that** the backing rollers (27, 28, 29), wholly or partly, specifically at least in the region of an outer cover (50), consist of elastically compressible material, preferably of silicone.

8. Apparatus according to Claim 7 or one of the further claims, **characterized in that** the backing rollers (27, 28, 29) have an outer contact face for the material web (10), which has a greater width than sealing faces of the sealing rollers (23, 24, 25), in particular than the sealing web (47) of the same.

9. Apparatus according to Claim 1 or one of the further claims, **characterized in that** the sealing rollers (23..25) and the housing (31) are fitted to a carrier (26), which is mounted such that it can be adjusted, in particular as a pivotable, single-armed lever.

10. Apparatus according to Claim 1 or one of the further claims, **characterized in that** the backing rollers (27, 28, 29) are fitted to a holder (30) which can be adjusted relative to the sealing rollers (23, 24, 25).

11. Apparatus according to Claim 1 or one of the further claims, **characterized in that** the sealing rollers (23, 24, 25) and backing rollers (27, 28, 29) act in the region of an upright conveying section, specifically an upright strand (22) of the material web (10).

## Revendications

1. Appareil pour la jonction d'une bandelette de matériau (12, 13) amenée de façon continue, en particulier d'une bandelette de déchirage, à une bande de matériau (10) transportée de façon continue, en particulier une bande de feuille, pour la production de découpes pour des enveloppes de paquets à bandelette de déchirage, la bandelette de matériau (12, 13) pouvant être pressée sur la bande de matériau (10) et jointe à celle-ci par des organes de pression et de soudage chauffés et tournant suivant le mouvement de transport de la bande de matériau (10) et de la bandelette de matériau, comme organe de pression et de soudage étant prévu un rouleau de soudage chauffé, **caractérisé par le fait que** plusieurs rouleaux de soudage (23, 24, 25) sont placés à la suite les uns des autres dans la direction de transport et sont chauffés principalement ou exclusivement indirectement, que dans la zone entre les rouleaux de soudage successifs (23, 24, 25) et à faible distance de la bande de matériau (10) ou de la bandelette de matériau (12, 13) sont placés des organes de transmission de chaleur, à savoir des entretoises chauffées (46), que ces entretoises (46) sont à paroi mince et s'étendent dans la direction longitudinale de la bandelette de matériau (12, 13), et que les entretoises (46) suivent à distance le contour des rouleaux de soudage (23, 24, 25) placés à la suite les uns des autres dans la direction de transport.

2. Appareil selon la revendication 1, **caractérisé par le fait que** les entretoises (46) sont en matière conductrice de la chaleur.

3. Appareil selon l'une des revendications 1 et 2, **caractérisé par le fait que** les rouleaux de soudage (23, 24, 25) sont montés dans une boîte (31) faite d'une matière à haute conductivité thermique, la boîte étant chauffée, de préférence par au moins une cartouche chauffante (33) placée dans la boîte (31).

4. Appareil selon la revendication 1 ou une des autres revendications, **caractérisé par le fait que** les entretoises (46) sont placées sur une boîte (31) et chauffées par celle-ci ou par une cartouche chauffante (33) placée dans la boîte (31).

5. Appareil selon la revendication 1 ou une des autres revendications, **caractérisé par le fait que** dans la direction de transport de la bande de matériau (10) et de la bandelette de matériau (12, 13) sont placées plusieurs paires de rouleaux de soudage (23, 24, 25) et contre-rouleaux (27, 28, 29) se faisant face, en particulier trois paires de rouleaux de soudage (23, 24, 25) et contre-rouleaux (27, 28, 29) de préférence approximativement de même grandeur.

6. Appareil selon la revendication 1 ou une des autres revendications, **caractérisé par le fait que** les rouleaux de soudage (23, 24, 25) présentent un profil (en forme de T) avec une nervure de soudage extérieure étroite faisant tout le tour (47) pour l'appui sur la bandelette de matériau (12, 13), la nervure de soudage (47) faisant en particulier partie d'une couronne tournante extérieure (39) des rouleaux de soudage (23, 24, 25) et étant en matière conductrice de la chaleur.

7. Appareil selon la revendication 1 ou une des autres revendications, **caractérisé par le fait que** les contre-rouleaux (27, 28, 29) sont constitués en totalité ou en partie, à savoir au moins dans la zone d'une enveloppe extérieure (50), d'un matériau compressible élastiquement, de préférence de silicone.

8. Appareil selon la revendication 7 ou une des autres revendications, **caractérisé par le fait que** les contre-rouleaux (27, 28, 29) présentent une surface d'appui extérieure pour la bande de matériau (10) qui a une plus grande largeur que les surfaces de soudage des rouleaux de soudage (23, 24, 25), en particulier que la nervure de soudage (47).

9. Appareil selon la revendication 1 ou une des autres revendications, **caractérisé par le fait que** les rouleaux de soudage (23, 24, 25) ou la boîte (31) sont placés sur un support (26) qui est monté mobile, en particulier comme levier basculant à un bras.

10. Appareil selon la revendication 1 ou une des autres revendications, **caractérisé par le fait que** les contre-rouleaux (27, 28, 29) sont montés sur un support (30) qui est mobile par rapport aux rouleaux de soudage (23, 24, 25).

11. Appareil selon la revendication 1 ou une des autres revendications, **caractérisé par le fait que** les rouleaux de soudage (23, 24, 25) et les contre-rouleaux (27, 28, 29) agissent dans la zone d'un tronçon de transport vertical, à savoir d'un brin vertical (22) de la bande de matériau (10).
